# EUROPÄISCHE PATENTSCHRIFT

(11) **EP 1 924 461 B1**
(45) Veröffentlichungstag und Bekanntmachung des Hinweises auf die Patenterteilung: **13.04.2011**
(21) Anmeldenummer: 06791585.0
(22) Anmeldetag: 17.08.2006
(51) Int. Cl.: B60K 31/00, B60W 30/16, B60W 50/08, B60W 30/10, B60W 30/14

(54) **ABSTANDSBEZOGENES FAHRGESCHWINDIGKEITSREGELSYSTEM**
INTER-VEHICLE-DISTANCE-RELATED CRUISE CONTROL SYSTEM
SYSTEME DE REGULATION DE LA VITESSE DE ROULAGE EN FONCTION D'UNE DISTANCE

(30) Priorität: 16.09.2005 DE 102005044174
(43) Veröffentlichungstag der Anmeldung: 28.05.2008
(73) Patentinhaber: Bayerische Motoren Werke Aktiengesellschaft, 80809 München (DE)
(72) Erfinder: PFEIFFER, Andreas, 83607 Holzkirchen (DE); STEINLE, Joachim, 80993 München (DE); BRANDSTÄTER, Martin, Greenville, 29605 (US)
(86) Internationale Anmeldenummer: PCT/EP2006/008125
(87) Internationale Veröffentlichungsnummer: WO 2007/033735

(56) Entgegenhaltungen:
- EP-A2- 1 288 055
- WO-A-2004/045891
- DE-A1- 10 131 478

## Beschreibung

Die Erfindung bezieht sich auf ein abstandsbezogenes Fahrgeschwindigkeitsregelsystem für ein Kraftfahrzeug nach dem Oberbegriff des Patentanspruchs 1.

Abstandsbezogene Fahrgeschwindigkeitsregelsysteme in Kraftfahrzeugen dienen dazu, Stellsignale zur Regelung der Geschwindigkeit auf eine vom Fahrer vorgegebene Geschwindigkeit vorzugeben, falls durch die Sensoren zur Vorraumüberwachung kein vorausfahrendes Fahrzeug auf der gleichen Fahrspur, also kein Zielobjekt detektiert wird. Es handelt sich somit um eine Freifahrt des Kraftfahrzeugs. Wird jedoch ein vorausfahrendes Fahrzeug auf der Fahrspur detektiert und wird dieses vorausfahrende Fahrzeug zum Zielobjekt bestimmt, werden Stellsignale zur Regelung der Geschwindigkeit auf einen vorgegebenen Abstand zu dem auf der Fahrspur detektierten Fahrzeug bzw. Zielobjekt vorgegeben. Es findet somit eine Abstandsregelung auf ein Zielobjekt statt.

Aus dem gattungsbildenden Dokument EP 1 288 055 ist ein derartiges Fahrgeschwindigkeitsregelsystem bekannt.

Aus der DE 42 00 694 B4 ist ein abstandsbezogenes Fahrgeschwindigkeitsregelsystem bekannt, bei dem bei einem Eingriff des Fahrers in das Fahrgeschehen in Form von Setzen des Fahrtrichtungsanzeigers und/oder Betätigung des Gaspedals die Regelung des Abstands für einen vorbestimmten Zeitraum unterbrochen wird. Durch die Unterbrechung der Abstandsregelung wird sichergestellt, dass nach Eingreifen des Fahrers der aktuelle Abstand zu einem in Fahrtrichtung befindlichen Gegenstand, insbesondere zu einem vorausfahrenden Fahrzeug, von der Regeleinrichtung nicht mehr berücksichtigt wird.

Weiter ist aus der EP 0 876 936 B1 ein Verfahren zur Geschwindigkeits- und Abstandsregelung eines Kraftfahrzeugs bekannt, wobei bei einem Eingriff des Fahrers in das Fahrgeschehen die Abstandsregelung unterbrochen und das Kraftfahrzeug im Rahmen der Geschwindigkeitsregelung auf die vorgegebene Wunschgeschwindigkeit geregelt wird. Dieses Verfahren soll den Fahrer unter anderem bei einem Überholvorgang derart unterstützen, dass er bereits kurz vor dem Überholvorgang dichter auf das vorausfahrende Fahrzeug auffahren kann, um anschließend zügig das vorausfahrende Fahrzeug überholen zu können.

Weiter ist aus der DE 102 12 684 A1 ein Fahrerassistenzsystem bekannt, dass zumindest eine Geschwindigkeitsregelung mit und ohne Abstandsregelung vornehmen kann, wobei die verschiedenen Regelstrategien durch den Fahrer mittels eines Bedienelements wählbar sind.

Aufgabe der Erfindung ist es, ein verbessertes abstandsbezogenes Fahrgeschwindigkeitsregelsystem anzugeben.

Diese Aufgabe wird erfindungsgemäß durch ein abstandsbezogenes Fahrgeschwindigkeitsregelsystem nach Patentanspruch 1 gelöst. Vorteilhafte Weiterbildungen sind die Gegenstände der abhängigen Ansprüche.

Das abstandsbezogene Fahrgeschwindigkeitsregelsystem für ein Kraftfahrzeug, das bei einer Freifahrt des Kraftfahrzeugs eine Geschwindigkeitsregelung auf eine vorgegebene Wunschgeschwindigkeit und bei einer Folgefahrt auf ein vorausfahrendes Fahrzeug eine Abstandsregelung auf einen vorgegebenen Abstand zu dem vorausfahrenden Fahrzeug vornimmt, und wobei die Abstandsregelung deaktivierbar ist, zeichnet sich dadurch aus, dass das abstandsbezogene Fahrgeschwindigkeitsregelsystem nach dem Deaktivieren der Abstandsregelung während einer Folgefahrt die Geschwindigkeitsregelung nicht auf die zuvor vorgegebene, sondern auf die zum Zeitpunkt der Deaktivierung der Abstandsregelung aktuelle Geschwindigkeit des Kraftfahrzeugs als Wunschgeschwindigkeit vornimmt.

Prinzipiell wird, während das abstandsbezogene Fahrgeschwindigkeitsregelsystem aktiv ist, eine herkömmliche Regelung vorgenommen. Dies bedeutet, dass bei einer Freifahrt, also wenn kein Zielobjekt detektiert wird, das abstandsbezogene Fahrgeschwindigkeitsregelsystem eine reine Geschwindigkeitsregelung auf eine vom Fahrer vorgegebene Wunschgeschwindigkeit vornimmt. Wird jedoch ein vorausfahrendes Fahrzeug auf der eigenen Fahrspur erkannt und somit zum Zielobjekt, wird, falls das Zielobjekt eine geringere Geschwindigkeit als die vorgegebene Wunschgeschwindigkeit hat, eine Abstandsregelung auf einen vorgegebenen Abstand zum Zielobjekt vorgenommen. Der Abstand kann durch den Fahrer oder durch Auswertung verschiedener Betriebsparameter und/oder Sensorsignale des Kraftfahrzeugs vorgegeben werden.

Das erfindungsgemäße abstandsbezogene Fahrgeschwindigkeitssystem sieht weiter vor, dass die Abstandsregelung deaktivierbar ist. Wird nun die Abstandsregelung während einer Folgefahrt, also während die Abstandsregelung durchgeführt wird, manuell oder automatisch deaktiviert, wird erfindungsgemäß nicht auf die zuvor vorgegebene Wunschgeschwindigkeit geregelt. Vielmehr wird als Wunschgeschwindigkeit die aktuelle Geschwindigkeit des Kraftfahrzeugs, also die Geschwindigkeit, mit der sich das Kraftfahrzeug zum Zeitpunkt der Deaktivierung der Abstandsregelung bewegt, vorgegeben. Auf diese aktuelle Geschwindigkeitsregelung wird dann regelt. Dadurch soll verhindert werden, dass das mit dem abstandsbezogenen Fahrgeschwindigkeitsregelsystem ausgestattete Kraftfahrzeug auf das Zielobjekt auffährt, wenn das vorausfahrende Fahrzeug bzw. das Zielobjekt mit gleicher Geschwindigkeit weiterfährt. Diese ist vor allem dann vorteilhaft, wenn sich der Fahrer während einer Folgefahrt auf einem kurvigen Straßenabschnitt aufgrund der hohen Geschwindigkeit des vorausfahrenden Fahrzeugs nicht sicher fühlt und deshalb die Abstandsregelung deaktiviert.

Vorteilhafterweise führt das abstandsbezogene Fahrgeschwindigkeitsregelsystem die Geschwindigkeitsregelung auf die aktuelle Geschwindigkeit als Wunschgeschwindigkeit nur dann durch, wenn die aktuelle Geschwindigkeit kleiner als die vorgegebene Wunschgeschwindigkeit ist. Dies ist dann sinnvoll, wenn der Fahrer beispielsweise kurzfristig die Regelung durch Betätigung des Gaspedals in der Weise übersteuert, dass das Kraftfahrzeug mit einer zur Wunschgeschwindigkeit erhöhten Geschwindigkeit fährt. In diesem Fall wird beim Deaktivieren der Abstandsregelung nicht auf die aktuelle Geschwindigkeit, sondern die zuvor vorgegebene Wunschgeschwindigkeit geregelt. Hierbei ist es unerheblich, ob die Deaktivierung während einer Folge- oder Freifahrt stattgefunden hat.

Vorteilhafterweise ist die Abstandsregelung manuell durch den Fahrer und/oder bei Vorliegen einer vorgegebenen Bedingung automatisch deaktivierbar. Eine manuelle Deaktivierung durch den Fahrer ist beispielsweise durch Betätigung eines Bedienelements möglich. Eine automatische Deaktivierung kann beispielsweise dann erfolgen, wenn aufgrund einer Auswertung vorgegebener Betriebsparameter und/oder vorgegebener Sensorsignale ein Betriebszustand des Fahrzeugs und/oder ein Verkehrsumfeld und/oder Witterungsumfeld erkannt wird, dass eine automatische Deaktivierung der Abstandsregelung für sinnvoll erscheinen lässt.

Vorteilhafterweise erzeugt das abstandsbezogene Fahrgeschwindigkeitsregelsystem bei deaktivierter Abstandsregelung ein Hinweissignal, um den Fahrer darauf aufmerksam zu machen, dass die Abstandsregelung derzeit nicht aktiv ist. Das Hinweissignal kann akustisch und/oder optisch und/oder haptisch und/oder kinästhetisch ausgestaltet sein.

Vorteilhafterweise wird die deaktivierte Abstandsregelung nach einem vorgegebenen Zeitintervall und/oder bei Vorliegen einer zweiten Bedingung wieder aktiviert. Somit steht dem Fahrer wieder die uneingeschränkte Funktion des abstandsbezogenen Fahrgeschwindigkeitsregelsystems zu Verfügung.

## Patentansprüche

1. Abstandsbezogenes Fahrgeschwindigkeitsregelsystem für ein Kraftfahrzeug, das bei einer Freifahrt des Kraftfahrzeugs eine Geschwindigkeitsregelung auf eine vorgegebene Wunschgeschwindigkeit und bei einer Folgefahrt auf ein vorausfahrendes Fahrzeug eine Abstandsregelung auf einen vorgegebenen Abstand zu dem vorausfahrenden Fahrzeug vornimmt, **dadurch gekennzeichnet, dass** die Abstandsregelung, während die Abstandsregelung bei einer Folgefahrt durchgeführt wird, manuell durch den Fahrer deaktivierbar ist und bei manuellem Deaktivieren der Abstandsregelung von der Abstandsregelung in eine Geschwindigkeitsregelung gewechselt wird, und das abstandsbezogene Fahrgeschwindigkeitsregelsystem nach dem manuellen Deaktivieren der Abstandsregelung während der Folgefahrt durch den Fahrer die Geschwindigkeitsregelung auf die aktuelle Geschwindigkeit des Kraftfahrzeugs als neue Wunschgeschwindigkeit statt auf die zuvor vorgegebene Wunschgeschwindigkeit vornimmt, und die aktuelle Geschwindigkeit diejenige Geschwindigkeit ist, mit der sich das Fahrzeug zum Zeitpunkt des Deaktivierens der Abstandsregelung bewegt.

2. Abstandsbezogenes Fahrgeschwindigkeitsregelsystem nach Patentanspruch 1, **dadurch gekennzeichnet, dass** das abstandsbezogene Fahrgeschwindigkeitsregelsystem die Geschwindigkeitsregelung auf die aktuelle Geschwindigkeit als Wunschgeschwindigkeit nur dann durchführt, wenn die aktuelle Geschwindigkeit kleiner als die vorgegebene Wunschgeschwindigkeit ist.

3. Abstandsbezogenes Fahrgeschwindigkeitsregelsystem nach einem der vorangegangenen Patentansprüche, **dadurch gekennzeichnet, dass** das abstandsbezogene Fahrgeschwindigkeitsregelsystem bei deaktivierter Abstandsregelung ein Hinweissignal erzeugt.

4. Abstandsbezogenes Fahrgeschwindigkeitsregelsystem nach einem der vorangegangenen Patenansprüche, **dadurch gekennzeichnet, dass** die deaktivierte Abstandsregelung nach einem vorgegebenen Zeitintervall und/oder bei Vorliegen einer zweiten Bedingung wieder aktiviert wird.

## Claims

1. A distance-related cruise control system for a motor vehicle which, during free travel of the motor vehicle, carries out a speed control to a predefined desired speed and, during travel following a vehicle ahead, carries out a distance control to a predefined distance from the vehicle ahead, **characterised in that** the distance control, which is carried out during the distance control during following travel, can be deactivated manually by the driver and on manual deactivation of the distance control, a changeover is made from the distance control to a speed control, and the distance related cruise control system, after the manual deactivation of the distance control during following travel by the driver, carries out the speed control to the current speed of the motor vehicle as a new desired speed instead of to the previously predefined desired speed, and the current speed is the speed at which the vehicle is moving at the time of deactivation of the distance control.

2. A distance-related cruise control system according to claim 1, **characterised in that** the distance-related cruise control system only carries out the speed control to the current speed as the desired speed when the current speed is less than the predetermined desired speed.

3. A distance-related cruise control system according to any one of the preceding claims, **characterised in that** the distance-related cruise control system produces an indication signal when the distance control is deactivated.

4. A distance-related cruise control system according to any one of the preceding claims, **characterised in that** the deactivated distance control is reactivated after a predetermined time interval and/or when a second condition is present.

## Revendications

1. Système de régulation de la vitesse de déplacement en fonction de la distance appliquée à un véhicule qui, en cas de déplacement libre du véhicule, assure une régulation de vitesse sur une vitesse de consigne souhaitée et qui, en mode de poursuite, assure une régulation de distance par rapport à un véhicule qui précède sur une distance de consigne par rapport au véhicule qui précède,
système **caractérisé en ce que**
pendant la régulation de distance en mode de poursuite, la régulation de distance peut être neutralisée manuellement par le conducteur et lors de la neutralisation manuelle de la régulation de distance, on passe de la régulation de distance à une régulation de vitesse, et
le système de régulation de vitesse en fonction de la distance, après la neutralisation manuelle de la régulation de distance, au cours du mode de poursuite, par le conducteur, assure la régulation de vitesse sur la vitesse actuelle du véhicule comme nouvelle vitesse de consigne souhaitée au lieu de passer à la vitesse de consigne définie précédemment, et la vitesse actuelle est la vitesse à laquelle le véhicule se déplace à l'instant où la régulation de distance est neutralisée.

2. Système de régulation de la vitesse de véhicule en fonction de la distance selon la revendication 1,
**caractérisé en ce que**
le système de régulation de vitesse de déplacement en fonction de la distance effectue la régulation de vitesse sur la vitesse actuelle comme vitesse de consigne souhaitée seulement si la vitesse actuelle est inférieure à la vitesse de consigne prédéfinie.

3. Système de régulation de la vitesse de véhicule en fonction de la distance selon l'une des revendications précédentes,
**caractérisé en ce que**
le système de régulation de vitesse du véhicule en fonction de la distance génère un signal indicateur lorsque la régulation de distance est neutralisée.

4. Système de régulation de la vitesse de véhicule en fonction de la distance selon l'une des revendications précédentes,
**caractérisé en ce qu'**
à la fin d'un intervalle de temps prédéfini et/ou en cas d'apparition d'une seconde condition, la régulation de distance neutralisée sera de nouveau activée.
